# EUROPÄISCHE PATENTSCHRIFT

(11) **EP 2 216 525 B1**
(45) Veröffentlichungstag und Bekanntmachung des Hinweises auf die Patenterteilung: **29.08.2018**
(21) Anmeldenummer: 10150532.9
(22) Anmeldetag: 12.01.2010
(51) Int. Cl.: F01N 13/18, F16L 23/04

(54) **Abgasreinigungseinrichtung, Abgasanlage und Schellenverbindung**
Exhaust gas cleaning device, exhaust gas system and clamp connection
Dispositif de purification des gaz d'échappement, système de gaz d'échappement et connexion par serrage

(30) Priorität: 05.02.2009 DE 102009007391
(43) Veröffentlichungstag der Anmeldung: 11.08.2010
(73) Patentinhaber: Eberspächer Exhaust Technology GmbH & Co. KG, 66539 Neunkirchen (DE)
(72) Erfinder: Datz, Wolfgang, 72070 Tübingen (DE); Krause, Michael, 73095 Albershausen (DE)
(74) Vertreter: BRP Renaud & Partner mbB Rechtsanwälte Patentanwälte Steuerberater

(56) Entgegenhaltungen:
- EP-A1- 2 017 516
- FR-A1- 2 901 189
- GB-A- 1 114 653
- US-A1- 2006 053 779

## Beschreibung

Die vorliegende Erfindung betrifft eine Schellenverbindung für eine Abgasreinigungseinrichtung und/oder für eine Abgasanlage einer Brennkraftmaschine, insbesondere eines Kraftfahrzeugs. Die Erfindung betrifft außerdem eine mit einer derartigen Schellenverbindung ausgestattete Abgasreinigungseinrichtung sowie eine mit einer solchen Abgasreinigungseinrichtung und/oder Schellenverbindung ausgestattete Abgasanlage.

Abgasanlagen von Brennkraftmaschinen enthalten üblicherweise mehrere Abgasreinigungseinrichtungen, wie zum Beispiel Katalysatoren, Partikelfilter und dergleichen. Bei großen Laufleistungen der damit ausgestatteten Brennkraftmaschinen kann es erforderlich sein, ein Reinigungselement einer derartigen Abgasreinigungseinrichtung auszutauschen bzw. zu warten. Beispielsweise können Partikelfilter durch nicht verbrennbare Rückstände allmählich zusetzen. Ebenso können sich Katalysatoren "abnutzen". Um einen derartigen Austausch einzelner Reinigungselemente zu ermöglichen, können Gehäuseabschnitte der jeweiligen Abgasreinigungseinrichtung mit Hilfe von Schnellbefestigungsmitteln an benachbarten Gehäuseabschnitten befestigt sein. Durch Lösen dieser Schnellbefestigungsmittel kann somit ein zwischen zwei anderen Gehäuseabschnitten liegender Gehäuseabschnitt quer zur Längsrichtung des Gehäuses demontiert werden. Auf diese Weise werden die zu wartenden bzw. auszutauschenden Reinigungselemente gut zugänglich. Auch die anschließende Montage erfolgt wieder quer zur Längsrichtung des Gehäuses unter Verwendung der Schnellbefestigungsmittel. Als Schnellbefestigungsmittel kommen zum Verbinden von Rohrkörpern beispielsweise Schellenverbindungen zum Einsatz, die sich durch eine preiswerte Herstellbarkeit sowie durch eine einfache Handhabung auszeichnen. Problematisch bei derartigen Schellenverbindungen sind dabei häufig die relativ großen Herstellungstoleranzen einerseits bei der jeweiligen Schelle und andererseits bei den damit zu verbindenden Gehäuseabschnitten. Derartige Fertigungstoleranzen lassen sich beispielsweise durch Dichtungen weitgehend ausgleichen. Allerdings führen die Herstellungstoleranzen häufig zu asymmetrischen Belastungen der Dichtungen, wodurch diese im Laufe der Zeit undicht werden können. Im Falle einer Leckage können unerwünschte Schadstoffemissionen in die Umgebung sowie überhöhte thermische Belastungen benachbarter Komponenten auftreten.

Eine gattungsgemäße Schellenverbindung ist aus der EP 2 017 516 A1 bekannt. Sie umfasst einen am ersten Rohrkörper ausgebildeten ersten Ringkragen, der radial nach außen absteht und geschlossen umläuft, und einen am zweiten Rohrkörper ausgebildeten zweiten Ringkragen, der radial nach außen absteht und geschlossen umläuft. Ferner ist ein ein Dichtring vorgesehen, der geschlossen umläuft und am ersten Ringkragen und am zweiten Ringkragen axial anliegt. Außerdem sind ein erster Ringkörper, der außen am ersten Rohrkörper angeordnet ist und an einer vom Dichtring abgewandten Seite am ersten Ringkragen axial anliegt, sowie ein zweiter Ringkörper vorgesehen, der außen am zweiten Rohrkörper angeordnet ist und an einer vom Dichtring abgewandten Seite am zweiten Ringkragen axial anliegt. Schließlich ist eine Schelle vorgesehen, die beide Ringkörper übergreift und axial aufeinander zu spannt.

Die vorliegende Erfindung beschäftigt sich mit Problem, für eine Schellenverbindung bzw. für eine damit ausgestattete Abgasreinigungseinrichtung bzw. für eine damit ausgestattete Abgasanlageeine verbesserte Ausführungsform anzugeben, die sich insbesondere dadurch auszeichnet, dass sie vergleichsweise preiswert realisierbar ist und die außerdem eine vergleichsweise große Lebensdauer für die Schellenverbindung gewährleisten soll.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, an zwei Rohrkörpern, die mit Hilfe einer Schellenverbindung lösbar miteinander verbunden werden sollen, jeweils einen radial nach außen abstehenden Ringkragen auszubilden, die an einander zugewandten Seiten an einem gemeinsamen Dichtring anliegen und an denen sich die jeweilige Schelle an voneinander abgewandten Seiten jeweils über einen separaten, in der Umfangsrichtung unterbrochenen Ringkörper abstützt. Derartige Ringkragen lassen sich an den Rohrkörpern vergleichsweise preiswert mit relativ engen Toleranzen herstellen. Außerdem lassen sich derartige Ringkörper separat von den Rohrkörpern vergleichsweise preiswert mit relativ engen Toleranzen herstellen. Dementsprechend herrschen innerhalb der Schellenverbindung vergleichsweise enge Toleranzen, wodurch sich für den Dichtring eine relativ symmetrische bzw. gleichförmige Belastung ergibt. Dies wirkt sich vorteilhaft für die Dichtungswirkung und Lebenszeit des Dichtrings und somit der Schellenverbindung aus. Obwohl bei der vorgeschlagenen Schellenverbindung mehrere Einzelteile verwendet und miteinander verbaut werden müssen, lässt sich diese Bauform vergleichsweise preiswert realisieren, wobei gleichzeitig deutlich engere Toleranzen eingehalten werden können.

Entsprechend einer vorteilhaften Ausführungsform können die Ringkörper am jeweiligen Rohrkörper befestigt sein, und zwar so, dass sie bereits an der vom Dichtring abgewandten Seite am jeweiligen Ringkragen des Rohrkörpers anliegen. Durch die Fixierung der Ringkörper an den Rohrkörpern vereinfacht sich die Demontage und spätere erneute Montage, da die Ringkörper am dafür vorgesehenen Montageort verbleiben. Geeignete Fixierungen lassen sich dabei preiswert realisieren, beispielsweise durch Schweiß- oder Lötverbindungen, insbesondere in Form von Schweiß- bzw. Löt-Punkten.

Gemäß einer anderen vorteilhaften Ausführungsform können die beiden Ringkragen jeweils eine ebene Kontaktfläche aufweisen, über welche sie am Dichtring flächig anliegen. Durch die flächige Anlage zwischen den Ringkragen und dem Dichtring werden die mit Hilfe der Schelle erzeugten axialen Druckkräfte großflächig verteilt, wodurch der Dichtring insgesamt vergleichsweise gering und vor allem gleichmäßig belastet wird. Zum einen verbessert sich dadurch die Dichtungswirkung. Zum anderen erhöht sich dadurch die Dauerhaltbarkeit des Dichtrings.

Bei einer anderen vorteilhaften Ausführungsform kann der Dichtring radial innen mit einem in Umfangsrichtung umlaufenden Schutzring ausgestattet sein. Durch diesen Schutzring kann der Dichtring beispielsweise vor einer thermischen Belastung durch die in den Rohrkörpern strömenden heißen Abgasen geschützt werden, was ebenfalls die Lebensdauer des Dichtrings und somit der gesamten Schellenverbindung erhöht.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

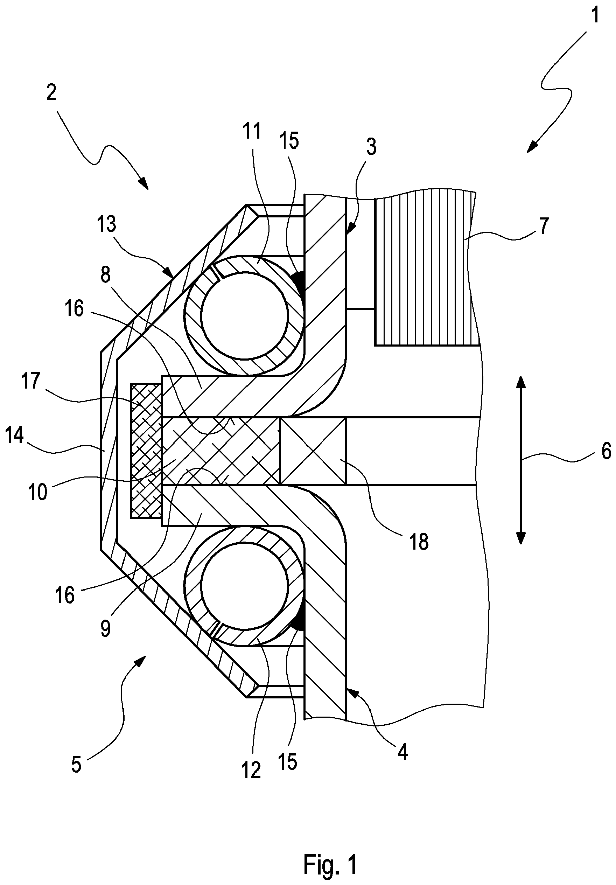

Die einzige Figur 1 zeigt einen stark vereinfachten prinzipiellen Längsschnitt durch eine Abgasanlage innerhalb einer Abgasreinigungseinrichtung im Bereich einer Schellenverbindung.

Entsprechend Figur 1 umfasst eine hier nur teilweise dargestellte Abgasanlage 1 zumindest eine ebenfalls nur teilweise dargestellte Abgasreinigungseinrichtung 2, bei der es sich beispielsweise um einen Katalysator oder um ein Partikelfilter handeln kann. Die Abgasanlage 1 dient zum Abführen von Abgasen von einer Brennkraftmaschine, die insbesondere in einem Kraftfahrzeug und vorzugsweise in einem Nutzfahrzeug angeordnet sein kann. Um eine Wartung bzw. um einen Austausch wenigstens eines hier nur teilweise dargestellten Abgasreinigungselements 7 der Abgasreinigungseinrichtung 2 zu vereinfachen bzw. zu ermöglichen, sind innerhalb der Abgasanlage 1 bzw. innerhalb der Abgasreinigungseinrichtung 2 zumindest zwei Rohrkörper, nämlich ein erster Rohrkörper 3 und ein zweiter Rohrkörper 4 über eine Schellenverbindung 5 lösbar miteinander verbunden. Die beiden Rohrkörper 3, 4 erstrecken sich zumindest im Bereich der Schellenverbindung 5 parallel zu einer Längsrichtung oder Axialrichtung, die in Figur 1 durch einen Doppelpfeil 6 angedeutet ist. Die Schellenverbindung 5 drückt die beiden Rohrkörper 3, 4 axial gegeneinander. Das zuvor genannte Abgasreinigungselement 7, bei dem es sich beispielsweise um ein Partikelfilterelement oder um ein Katalysatorelement handeln kann, ist in einem der beiden Rohrkörper, hier im ersten Rohrkörper 3 angeordnet. Der erste Rohrkörper 3 kann an seinen beiden axialen Enden jeweils über eine derartige Schellenverbindung 5 mit einem anderen bzw. zweiten Rohrkörper 4 verbunden sein. Bei gelösten Schellenverbindungen 5 kann der erste Rohrkörper 3 quer zur Längsrichtung 6 demontiert werden. Auf diese Weise kann das darin enthaltene Abgasreinigungselement 7 einfach gewartet bzw. ausgetauscht werden. Insbesondere kann eine komplette Einheit aus erstem Rohrkörper 3 und darin eingesetztem Abgasreinigungseinrichtung 7 ausgetauscht werden. Alternativ ist es ebenso möglich, den zweiten Rohrkörper 4 an seinen beiden axialen Enden jeweils mit einer solchen Schellenverbindung 5 mit einem weiteren bzw. ersten Rohrkörper 3 zu verbinden. Durch Lösen der beiden Schellenverbindungen 5 kann dann der zweite Rohrkörper 4 quer zur Längsrichtung 6 entfernt werden, wodurch das jeweilige im ersten Rohrkörper 3 angeordnete Abgasreinigungselement 7 für Wartungszwecke bzw. zum Austauschen gut zugänglich ist.

Die Rohrkörper 3, 4 bilden somit insbesondere Gehäuseabschnitte eines nicht näher bezeichneten Gehäuses der Abgasreinigungseinrichtung 2. Der jeweilige entfernbare Gehäuseabschnitt, also entweder der erste Rohrkörper 3 oder der zweite Rohrkörper 4, kann bevorzugt über zwei derartige Schellenverbindungen 5 an benachbarte Gehäuseabschnitte angeschlossen sein.

Die hier gezeigte Schellenverbindung 5 umfasst einen am ersten Rohrkörper 3 ausgebildeten ersten Ringkragen 8, der an einem Axialende des ersten Rohrkörpers 3 radial nach außen absteht und in der Umfangsrichtung geschlossen umlaufend ausgestaltet ist. Symmetrisch dazu ist am zweiten Rohrkörper 4 ein zweiter Ringkragen 9 ausgebildet, der am jeweiligen Axialende des zweiten Rohrkörpers 4 radial nach außen absteht und in Umfangsrichtung geschlossen umläuft. Des Weiteren umfasst die Schellenverbindung 5 einen Dichtring 10, der ebenfalls in Umfangsrichtung geschlossen umlaufend ausgestaltet ist und der sowohl am ersten Ringkragen 8 als auch am zweiten Ringkragen 9 jeweils axial anliegt. Die Schellenverbindung 5 weist somit nur einen einzigen Dichtring 10 auf, wodurch sie vergleichsweise preiswert realisierbar ist. Der Dichtring 10 befindet sich dabei an einander zugewandten Seiten der Ringkragen 8, 9, die im Folgenden auch als Innenseiten der Ringkragen 8, 9 bezeichnet werden können.

Des Weiteren besitzt die Schellenverbindung 5 einen ersten Ringkörper 11, der am ersten Rohrkörper 3 an einer vom Dichtring 10 abgewandten Seite des ersten Ringkragens 8 angeordnet ist. Die voneinander abgewandten Seiten bzw. vom Dichtring 10 abgewandten Seiten der Ringkragen 8, 9 werden im Folgenden auch als Außenseiten bezeichnet. Dementsprechend liegt der erste Ringkörper 11 an der Außenseite des ersten Ringkragens 8 axial an. Die beiden Rohrkörper 3, 4 umschließen jeweils einen Innenraum bzw. eine Innenseite. Der erste Ringkörper 11 ist am ersten Rohrkörper 3 außen angeordnet, also an dessen Außenseite und liegt außen am ersten Rohrkörper 3 an. Analog dazu umfasst die Schellenverbindung 5 außerdem einen zweiten Ringkörper 12, der außen am zweiten Rohrkörper 4 angeordnet ist, und zwar so, dass er an der Außenseite des zweiten Rohrkörpers 4 radial anliegt und an der Außenseite des zweiten Ringkragens 9 axial anliegt.

Der jeweilige Ringkörper 11, 12 erstreckt sich in Umfangsrichtung und ist in der Umfangsrichtung unterbrochen. Beispielsweise erstreckt sich der jeweilige Ringkörper 11, 12 in Umfangsrichtung nur über einen Bereich von maximal 330° oder maximal 355°. Hierdurch erhöht sich die Flexibilität, was den Toleranzausgleich verbessert.

Schließlich umfasst die Schellenverbindung 5 noch eine Schelle 13, die so geformt ist, dass sie die beiden Ringkörper 11, 12 übergreift und im gespannten Zustand der Schelle 13 axial aufeinander zuspannt. Die Schelle 13 besitzt hier ein C-förmiges oder V-förmiges Profil und kann daher auch als V-Schelle 13 bezeichnet werden. Darüber hinaus ist die Schelle 13 zumindest in einem Spannbereich 14 bandförmig ausgestaltet. Dieser bandförmige Spannbereich 14 erstreckt sich in Umfangsrichtung und kann mit Hilfe eines entsprechenden Schellenverschlusses, der hier nicht dargestellt ist, in Umfangsrichtung gespannt werden.

Dementsprechend kann die Schelle 13 auch als Bandschelle 13 und insbesondere als V-Bandschelle 13 bezeichnet werden.

Die beiden Ringkörper 11, 12 können vorzugsweise am jeweiligen Rohrkörper 3, 4 befestigt sein. Entsprechende Befestigungsstellen sind in Figur 1 mit 15 bezeichnet. Beispielsweise können diese Ringkörper 11, 12 am jeweiligen Rohrkörper 3, 4 durch wenigstens eine Schweißverbindung befestigt sein. Denkbar ist eine Anzahl in Umfangsrichtung voneinander beabstandeter Schweißpunkte. Alternativ ist auch eine umlaufende Schweißnaht denkbar. Ebenso ist es möglich, die Befestigungsstellen 15 mit Hilfe einer Lötverbindung zu realisieren, die ebenfalls punktförmig oder linienförmig ausgestaltet sein kann. Bei fehlender Befestigung der Ringkörper 11, 12 am jeweiligen Rohrkörper 3, 4 erhöht sich die allgemeine Flexibilität und der Toleranzausgleich wird verbessert.

Bei der hier gezeigten bevorzugten Ausführungsform können die beiden Ringkörper 11, 12 durch gerollte Rundprofile gebildet sein. Bevorzugt handelt es sich hierbei um gerollte Kreisprofile. Hierzu werden ebene, bandförmige Körper durch Rollumformen zu den Rundprofilen bzw. Kreisprofilen umgeformt. Derartige profilierte Ringkörper 11, 12 zeichnen sich durch eine besonders hohe Stabilität aus, ferner sind sie im Vergleich zu Vollkörpern leichter und preiswerter. Außerdem sind sie federelastisch und können dadurch eine axiale Vorspannung aufnehmen und Toleranzen ausgleichen.

Entsprechend der hier gezeigten bevorzugten Ausführungsform sind die beiden Ringkragen 8, 9 so geformt, dass ihre einander zugewandten Innenseiten jeweils eben sind und somit ebene Kontaktflächen 16 bilden, die im montierten Zustand am Dichtring 10 flächig anliegen. Hierdurch ergibt sich eine gleichmäßige axiale Belastung des Dichtrings 10. Im Beispiel erstrecken sich die Kontaktflächen 16 in zueinander parallelen Ebenen, die außerdem quer zur Längsrichtung 6 orientiert sind. Hierdurch vereinfacht sich der Zusammenbau der Schellenverbindung 5.

Im gezeigten Beispiel weist der Dichtring 10 radial außen zumindest einen Quersteg 17 auf. Dieser ist radial außen an den Ringkragen 8, 9 abgestützt. Hierzu übergreift er den Dichtring 10 in axialer Richtung beidseitig. Mit Hilfe des Querstegs 17 kann die Ringdichtung 10 beim Montieren und beim Demontieren der Schellenverbindung 5 an den Ringkragen 8, 9 positioniert werden. Hierdurch vereinfacht sich die Handhabung der Schellenverbindung 5. Grundsätzlich können mehrere derartige Querstege 17 in Umfangsrichtung verteilt am Dichtring 10 angeordnet sein. Ebenso ist es möglich, einen einzigen bandförmigen Quersteg 17 vorzusehen, der sich dann in Umfangsrichtung erstreckt. Vorzugsweise sind die Querstege 17 bzw. ist der einzige bandförmige Quersteg 17 so ausgelegt, dass maximal 180° eines Umfangsabschnitts des Dichtrings 10 vom Quersteg 17 überdeckt ist bzw. mit den Querstegen 17 versehen ist. Hierdurch kann der Dichtring 10 auch dann einfach quer zur Längsrichtung 6 entfernt werden, wenn bei entfernter Schelle 13 nur eine geringe Axialbewegung zwischen den beiden Rohrkörpern 3, 4 möglich ist. Der jeweilige Quersteg 17 ist auf geeignete Weise am Dichtring 10 befestigt.

Entsprechend der hier gezeigten Ausführungsform kann der Dichtring 10 radial innen einen Schutzring 18 aufweisen, der in Umfangsrichtung umlaufend ausgestaltet ist. Der Schutzring 18 kann beispielsweise aus einem anderen Material als der Dichtring 10 bestehen, zum Beispiel aus einem Metall oder aus Keramik. Der Schutzring 18 kann thermisch isolierend ausgestaltet sein. Zusätzlich oder alternativ kann er gegenüber der aggressiven Atmosphäre der in der Abgasanlage 1 transportierten Abgase resistent, insbesondere oxidationsfest ausgestaltet sein. Darüber hinaus kann der Schutzring 18 temperaturfest ausgestaltet sein. Hierdurch ergibt sich ein effektiver Schutz des Dichtrings 10 vor der aggressiven Umgebung im Inneren der Rohrkörper 3, 4. Zweckmäßig ist der Dichtring 10 in radialer Richtung so dimensioniert, dass sich der Schutzring 18 in einem Bereich des Dichtrings 10 befindet, der bei montierter Schelle 13 zwischen den beiden Ringkragen 8, 9 nicht axial verspannt ist. Mit anderen Worten, die beiden Ringkragen 8, 9 stützen sich außerhalb des Schutzrings 18 am Dichtring 10 ab. Hierdurch ist insbesondere eine Kompression des Dichtrings 10 möglich, ohne den Schutzring 18 zwischen den Ringkragen 8, 9 zu verpressen. Der Schutzring 18 ist auf geeignete Weise am Dichtring 10 befestigt.

## Patentansprüche

1. Schellenverbindung zum lösbaren Verbinden eines ersten Rohrkörpers (3) mit einem zweiten Rohrkörper (4), insbesondere für eine Abgasanlage (1) oder eine Abgasreinigungseinrichtung (2),
- mit einem am ersten Rohrkörper (3) ausgebildeten ersten Ringkragen (8), der radial nach außen absteht und geschlossen umläuft,
- mit einem am zweiten Rohrkörper (4) ausgebildeten zweiten Ringkragen (9), der radial nach außen absteht und geschlossen umläuft,
- mit einem Dichtring (10), der geschlossen umläuft und am ersten Ringkragen (8) und am zweiten Ringkragen (9) axial anliegt,
- mit einem ersten Ringkörper (11), der außen am ersten Rohrkörper (3) angeordnet ist und an einer vom Dichtring (10) abgewandten Seite am ersten Ringkragen (8) axial anliegt,
- mit einem zweiten Ringkörper (12), der außen am zweiten Rohrkörper (4) angeordnet ist und an einer vom Dichtring (10) abgewandten Seite am zweiten Ringkragen (9) axial anliegt,
- mit einer Schelle (13), die beide Ringkörper (11, 12) übergreift und axial aufeinander zuspannt,
**dadurch gekennzeichnet,**
**dass** die beiden Ringkörper (11, 12) in der Umfangsrichtung unterbrochen sind.

2. Schellenverbindung nach Anspruch 1,
**dadurch gekennzeichnet,**
**dass** der Dichtring (10) radial innen einen in Umfangsrichtung umlaufenden Schutzring (18) aufweist.

3. Schellenverbindung nach Anspruch 1 oder 2,
**dadurch gekennzeichnet,**
**dass** der Dichtring (10) radial außen zumindest einen Quersteg (17) trägt, der sich radial außen an wenigstens einem der Ringkragen (8, 9) radial abstützt.

4. Schellenverbindung nach Anspruch 3,
**dadurch gekennzeichnet,**
**dass** mehrere Querstege (17) in Umfangsrichtung verteilt am Dichtring (10) angeordnet sind.

5. Schellenverbindung zumindest nach Anspruch 3,
**dadurch gekennzeichnet,**
**dass** ein einziger bandförmiger Quersteg (17) vorgesehen ist, der sich in Umfangsrichtung erstreckt.

6. Schellenverbindung zumindest nach Anspruch 2,
**dadurch gekennzeichnet,**
**dass** der Schutzring (18) thermisch isolierend und/oder oxidationsfest und/oder temperaturfest ausgestaltet ist.

7. Schellenverbindung zumindest nach Anspruch 2,
**dadurch gekennzeichnet,**
**dass** der Schutzring (18) in einem Bereich des Dichtrings (10) angeordnet ist, der bei montierter Schelle (13) nicht zwischen den Ringkragen (8, 9) axial verspannt ist.

8. Schellenverbindung nach einem der vorhergehenden Ansprüche,
**dadurch gekennzeichnet,**
**dass** die Ringkörper (11, 12) am jeweiligen Rohrkörper (3, 4) befestigt sind.

9. Schellenverbindung nach Anspruch 8,
**dadurch gekennzeichnet,**
**dass** die Ringkörper (11, 12) am jeweiligen Rohrkörper (3, 4) durch wenigstens eine Schweißverbindung (15) befestigt sind.

10. Schellenverbindung nach einem der Ansprüche 1 bis 7,
**dadurch gekennzeichnet,**
**dass** die Ringkörper (11, 12) am jeweiligen Rohrkörper (3, 4) lose anliegen.

11. Schellenverbindung nach einem der vorhergehenden Ansprüche,
**dadurch gekennzeichnet,**
**dass** die Ringkörper (11, 12) durch gerollte Rundprofile oder gerollte Kreisprofile gebildet sind.

12. Schellenverbindung nach einem der vorhergehenden Ansprüche,
**dadurch gekennzeichnet,**
**dass** die beiden Ringkragen (8, 9) jeweils eine ebene Kontaktfläche (16) aufweisen, über welche sie am Dichtring (10) flächig anliegen.

13. Abgasreinigungseinrichtung für eine Abgasanlage (1) einer Brennkraftmaschine, insbesondere eines Kraftfahrzeugs,
- mit einem Abgasreinigungselement (7), das in einem ersten Rohrkörper (3) angeordnet ist,
- mit mindestens einem zweiten Rohrkörper (4), mit dem der erste Rohrkörper (3) über eine Schellenverbindung (5) nach einem der Ansprüche 1 bis 12 lösbar verbunden ist.

14. Abgasanlage für eine Brennkraftmaschine, insbesondere eines Kraftfahrzeugs, mit mindestens einer Abgasreinigungseinrichtung (2) nach Anspruch 13 und/oder mit mindestens einer Schellenverbindung (5) nach einem der Ansprüche 1 bis 12.

## Claims

1. A clamp connection for the releasable connecting of a first pipe element (3) with a second pipe element (4), more preferably for an exhaust system (1) or an exhaust gas cleaning device (2),
- with a first ring collar (8) formed on the first pipe element (3), which stands away radially to the outside and runs around completely,
- with a second ring collar (9) formed on the second pipe element (4), which stands away radially to the outside and runs around completely,
- with a sealing ring (10), which runs around completely and axially abuts the first ring collar (8) and the second ring collar (9),
- with a first ring element (11), which is arranged outside on the first ring element (3) and axially abuts the first ring collar (8) on a side facing away from the sealing ring (10),
- with a second ring element (12) which is arranged outside on the second pipe element (4) and axially abuts a second ring collar (9) on a side facing away from the sealing ring (10),
- with a clamp (13) which engages over and axially clamps the two ring elements (11, 12) towards each other,
**characterized in that**
the two ring elements (11, 12) are interrupted in the circumferential direction.

2. The clamp connection according to Claim 1,
**characterized in that**
the sealing ring (10) radially inside comprises a circumferential protective ring (18) in circumferential direction.

3. The clamp connection according to Claim 1 or 2,
**characterized in that**
the sealing ring (10) radially outside carries at least one transverse web (17) which radially supports itself radially outside on at least one of the ring collars (8, 9).

4. The clamp connection according to Claim 3,
**characterized in that**
a plurality of transverse webs (17) is arranged on the sealing ring (10) distributed in circumferential direction.

5. The clamp connection according to Claim 3,
**characterized in that**
a single band-shaped transverse web (17) is provided, which extends in circumferential direction.

6. The clamp connection according to Claim 2,
**characterized in that**
the protective ring (18) is embodied insulating and/or oxidation-proof and/or temperature-resistant.

7. The clamp connection according to Claim 2,
**characterized in that**
the protective ring (18) is arranged in a region of the sealing ring (10) which, with assembled clamp 13, is not axially clamped between the ring collars (8, 9).

8. The clamp connection according to any one of the preceding Claims,
**characterized in that**
the ring elements (11, 12) are fastened to the respective pipe element (3, 4).

9. The clamp connection according to Claim 8,
**characterized in that**
the ring elements (11, 12) are fastened to the respective pipe element (3, 4) through at least one weld connection (15).

10. The clamp connection according to any one of the Claims 1 to 9,
**characterized in that**
the ring elements (11, 12) loosely abut the respective pipe element (3, 4).

11. The clamp connection according to any one of the preceding Claims,
**characterized in that**
the ring elements (11, 12) are formed through rolled round profiles or rolled circular profiles.

12. The clamp connection according to any one of the preceding Claims,
**characterized in that**
the two ring collars (8, 9) each have a flat contact surface (16) via which they abut the sealing ring (10) in a flat manner.

13. An exhaust gas cleaning device for an exhaust system (1) of a combustion engine, more preferably of a motor vehicle,
- with an exhaust gas cleaning element (7) which is arranged in a first pipe element (3),
- with at least one second pipe element (4) with which the first pipe element (3) is releasably connected via a clamp connection (5) according to any one of the Claims 1 to 12.

14. An exhaust system for a combustion engine, more preferably of a motor vehicle, with at least one exhaust gas cleaning device (2) according to Claim 13 and/or with at least one clamp connection (5) according to any one of the Claims 1 to 12.

## Revendications

1. Assemblage par collier en vue de l'assemblage amovible d'un premier corps tubulaire (3) avec un second corps tubulaire (4), en particulier pour une installation de gaz d'échappement (1) ou pour un dispositif d'épuration de gaz d'échappement (2),
- avec un premier collet annulaire (8), qui est réalisé sur le premier corps tubulaire (3) et qui dépasse radialement vers l'extérieur et fait le tour complet de la circonférence,
- avec un second collet annulaire (9), qui est réalisé sur le second corps tubulaire (4) et qui dépasse radialement vers l'extérieur et fait le tour complet de la circonférence,
- avec un joint d'étanchéité (10), qui fait le tour complet de la circonférence et qui est adjacent au premier collet annulaire (8) et au second collet annulaire (9),
- avec un premier corps annulaire (11), qui est agencé à l'extérieur sur le premier corps tubulaire (3) et qui est adjacent de façon axiale au premier collet annulaire (8) au niveau d'un côté opposé au joint d'étanchéité (10),
- avec un second corps annulaire (12), qui est agencé à l'extérieur sur le second corps tubulaire (4) et qui est adjacent de façon axiale au second collet annulaire (9) au niveau d'un côté opposé au joint d'étanchéité (10),
- avec un collier (13), qui passe par-dessus les deux corps annulaires (11, 12) et qui les serre de façon axiale l'un vers l'autre,
**caractérisé en ce que** les deux corps annulaires (11, 12) sont interrompus dans la direction circonférentielle.

2. Assemblage par collier selon la revendication 1, **caractérisé en ce que** le joint d'étanchéité (10) comporte, radialement à l'intérieur, un anneau de protection (18) qui fait le tour en direction circonférentielle.

3. Assemblage par collier selon la revendication 1 ou 2, **caractérisé en ce que** le joint d'étanchéité (10) porte, radialement à l'extérieur, au moins une barre transversale (17) qui s'appuie radialement à l'extérieur contre au moins l'un des collets annulaires (8, 9).

4. Assemblage par collier selon la revendication 3, **caractérisé en ce que** plusieurs barres transversales (17) sont agencées, réparties en direction circonférentielle, au niveau du joint d'étanchéité (10).

5. Assemblage par collier au moins selon la revendication 3, **caractérisé en ce qu'**il est prévu une seule barre transversale (17) en forme de bande qui s'étend dans la direction circonférentielle.

6. Assemblage par collier au moins selon la revendication 2, **caractérisé en ce que** l'anneau de protection (18) est réalisé isolant thermiquement et/ou résistant à l'oxydation et/ou résistant à la chaleur.

7. Assemblage par collier au moins selon la revendication 2, **caractérisé en ce que** l'anneau de protection (18) est agencé dans une zone du joint d'étanchéité (10) qui n'est pas serrée de façon axiale antre les collets annulaires (8, 9) lorsque le collier (13) est monté.

8. Assemblage par collier selon l'une quelconque des revendications précédentes, **caractérisé en ce que** les corps annulaires (11, 12) sont fixés au corps tubulaire (3, 4) respectif.

9. Assemblage par collier selon la revendication 8, **caractérisé en ce que** les corps annulaires (11, 12) sont fixés au corps tubulaire (3, 4) respectif par au moins une soudure (15).

10. Assemblage par collier selon l'une quelconque des revendications 1 à 7, **caractérisé en ce que** les corps annulaires (11, 12) s'appuient, libres, contre le corps tubulaire (3, 4) respectif.

11. Assemblage par collier selon l'une quelconque des revendications précédentes, **caractérisé en ce que** les deux corps annulaires (11, 12) sont formés par des profilés ronds enroulés ou par des profilés circulaires enroulés.

12. Assemblage par collier selon l'une quelconque des revendications précédentes, **caractérisé en ce que** les deux collets annulaires (8, 9) présentent chacun une surface de contact plane (16) par l'intermédiaire de laquelle ils s'appuient par leur surface contre le joint d'étanchéité (10).

13. Dispositif d'épuration de gaz d'échappement destiné à une installation de gaz d'échappement (1) d'un moteur à combustion interne, en particulier d'un véhicule automobile,
- avec un élément d'épuration de gaz d'échappement (7), qui est agencé dans un premier corps tubulaire (3),
- avec au moins un second corps tubulaire (4), avec lequel le premier corps tubulaire (3) est assemblé par l'intermédiaire d'un assemblage par collier (5) selon l'une quelconque des revendications 1 à 12.

14. Installation de gaz d'échappement destinée à un moteur à combustion interne, en particulier d'un véhicule automobile, avec au moins un dispositif d'épuration de gaz d'échappement (2) selon la revendication 13 et/ou avec au moins un assemblage par collier (5) selon l'une quelconque des revendications 1 à 12.
